# EUROPÄISCHE PATENTSCHRIFT

(11) **EP 1 186 237 B1**
(45) Veröffentlichungstag und Bekanntmachung des Hinweises auf die Patenterteilung: **31.03.2004**
(21) Anmeldenummer: 01120693.5
(22) Anmeldetag: 03.09.2001
(51) Int. Cl.: A22C 13/00

(54) **Mehrschichtige Schlauchfolie auf Basis von Polyamid**
Multilayered tubular film based on polyamide
Film tubulaire multicouche à base de polyamide

(30) Priorität: 06.09.2000 DE 10043899
(43) Veröffentlichungstag der Anmeldung: 13.03.2002
(73) Patentinhaber: Victus Lebensmittelindustriebedarf Vertriebsgesellschaft mbh, 1230 Wien (AT)
(72) Erfinder: Savic, Zoran, Dr., 1130 Wien (AT)
(74) Vertreter: Isenbruck, Günter, Dr.

(56) Entgegenhaltungen:
- EP-A- 0 453 925
- EP-A- 0 589 431
- EP-A- 0 589 436
- EP-A- 0 923 870
- WO-A-97/49293
- DE-A- 4 339 337
- DE-A- 19 650 383
- DE-A- 19 855 867
- FR-A- 2 517 178

## Beschreibung

Die Erfindung betrifft eine mehrschichtige Schlauchfolie auf Basis von Polyamid zur Aufnahme von pastösem Füllgut. Insbesondere handelt es sich um eine biaxial orientierte, thermofixierte Schlauchfolie, die bevorzugt als Wursthülle oder Verpackungshülle für Fleischerzeugnisse eingesetzt werden kann.

Biaxial orientierte Polyamid-Schlauchfolien werden vielfach zur Verpackung von Lebensmitteln als Barrierefolien eingesetzt. Dabei wirkt Polyamid als Barrieremedium vor allem gegen den Zutritt von Sauerstoff zu dem verpackten Lebensmittel, während die Sperrwirkung gegen den Austritt von Wasser aus dem Lebensmittel (Austrocknung) geringer ist. Zur Verbesserung der Wassersperrwirkung werden die Polyamidfolien mit Polyolefinen oder ähnlichen Polymeren co-extrudiert. Es können auch teilaromatische Polyamide, beispielsweise des Typs PA 6I/6T zu Standard-Polymeren zugemischt werden. Biaxial orientierte Schlauchfolien werden insbesondere in der Wurstindustrie verwendet. Dabei wird das Brühwurstbrät in Schlauchfolien gefüllt, die an beiden Enden verschlossen und dann in der Regel gekocht werden. Durch den für biaxial orientierte Folien typischen Kochschrumpf wird eine prall gefüllte, runde Wurst erhalten. Neben der Herstellung von Brüh- und Kochwurst dienen die Schlauchfolien auch zur Aufnahme anderer roher oder wärmebehandelter Fleischerzeugnisse. Auch andere Anwendungsgebiete als Barriereschrumpffolie in der Lebensmittelindustrie sind bekannt.

In der EP-A-0 589 431 sind wärmeschrumpfbare Nylonhüllen für Lebensmittel beschrieben. Dabei sind insbesondere mindestens dreischichtige Folien beschrieben, die eine Polyamid umfassende Innenschicht, eine Mittelschicht, die mindestens 50 Gew.-% Ethylen/Phenylacetat-Copolymer, das mindestens 70 Gew.-% Ethyleneinheiten aufweist, gemischt mit mindestens 10 Gew.-% Ethylen/Methacrylsäure-Copolymer enthält, und eine Polyamid umfassenden Außenschicht aufweisen, beschrieben. Als Mittelschicht wird insbesondere ein 70:30 Gemisch eines Ethylen-Vinylacetat-Copolymers und eines Ethylen-Methacrylsäure-Copolymers eingesetzt.

Die EP-A-0 589 436 betrifft ebenfalls eine wärmeschrumpfbare Lebensmittelhülle auf Nylonbasis. Die schlauchförmige, biaxial gestreckte und getemperte wämeschrumpfbare mehrschichtige Folie weist eine Innenschicht, die mindestens 60 Gew.-% eines Polyamids oder einer Mischung aus Polyamiden umfaßt, eine Kernschicht, die mindestens 60 Gew.-% eines Polyolefins umfaßt, und eine Außenschicht auf, die mindestens 60 Gew.-% eines Polyamids oder einer Mischung aus Polyamiden umfaßt. Die Kernschicht ist mit der Innenschicht und der Außenschicht durch Coextrusion oder Extrusionsbeschichtung direkt verbunden. Die mehrschichtige Folie weist nach dem Tempern einen Schrumpfungswert bei 90°C von mindestens 20 % in mindestens einer Richtung auf. Als Kernschicht wird insbesondere ein 70:30 Gemisch aus Polyethylen mit sehr niedriger Dichte und einem Ethylen-Methacrylsäure-Copolymer eingesetzt.

Die EP-A-0 467 039 betrifft eine mehrschichtige, schlauchförmige Verpackungshülle. Die Verpackungshülle weist eine äußere Schicht auf Basis von aliphatischem Polyamid, aliphatischem Copolyamid oder einer Mischung dieser Polymere, eine mittlere Schicht, die aus Polyolefin, einem Haftvermittler und gegebenenfalls Farbstoff oder Farbpigmenten besteht, wobei der Haftvermittler ein mit funktionellen Gruppen modifiziertes Polyolefinharz ist, und eine innere Schicht auf Basis von aliphatischen und/oder teilaromatischen Copolyamiden auf. Die Verpackungshülle weist insbesondere bei Wärmeeinwirkung bis etwa 90°C einen Schrumpf von weniger als 20 % in Längs- und Querrichtung auf. Die Mittelschicht ist insbesondere eine Mischung aus Polyethylen mit hoher Dichte und einem Haftvermittler auf Basis eines Ethylen-Copolymers mit sehr niedriger Dichte, das Acrylsäuregruppen aufweist.

Die beschriebenen mehrschichtigen biaxial verstreckten Polyamid/Polyolefin-Verbundschlauchfolien weisen in der Regel Durchmesser von 20 - 200 mm auf und werden in Wandstärken von 40 - 70 Mikrometer hergestellt. Sie haben insbesondere eine innenliegende Polyamidschicht mit einer definierten Haftung zur Lebensmittelmasse oder zum Wurstbrät. Die bekannten Schlauchfolien weisen jedoch nicht für alle Anwendungen ein geeignetes Eigenschaftsprofil auf Insbesondere bei unterschiedlichen Füllungen ist die Haftung der Schlauchfolien am Inhalt nicht immer zufriedenstellend.

DE-A-196 50 383 betrifft mehrschichtige Schlauchfolien, die insbesondere zwischen zwei Polyamidschichten eine Mittelschicht aufweisen, die aus EAA oder einem Ionomer aufgebaut sein kann. Die Mittelschicht (Zwischenschicht B) kann aus einem Polyolefinhomo- oder -copolymerisat aufgebaut sein. Vorzugsweise weist die Mittelschicht einen dreischichtigen Aufbau auf, in dem zwischen zwei Schichten aus funktionellen Polyolefinhomo- oder -copolymerisaten eine mittlere Schicht aus nicht funktionellen Polyolefinhomo- oder -copolymerisaten vorliegt. Als funktionelle Monomere werden Säureanhydridgruppen enthaltene Monomere wie Maleinsäureanhydrid erwähnt. Auch Methacrylsäure wird aufgeführt. Eine Kombination aus den zwei Komponenten Ethylen-C₁₋₈-Alkylacrylat-Copolymer und Ethylen-C₁₋₈-Alkylacrylat-Maleinsäureanhydrid-Copolymer ist jedoch nicht aufgeführt.

Aufgabe der vorliegenden Erfindung ist die Bereitstellung von mehrschichtigen Schlauchfolien, insbesondere für die Lebensmittelindustrie, die die Nachteile der bekannten Folien vermeiden und insbesondere flexibel an unterschiedlichste Inhaltsstoffe angepaßt werden können, wobei ein gewünschter Grad der Haftung erreicht wird.

Die Aufgabe wird erfindungsgemäß gelöst durch eine mehrschichtige Schlauchfolie auf Basis von Polyamid, umfassend
eine äußere Polymerschicht auf Basis von aliphatischen oder teilaromatischen Polyamiden oder Copolyamiden oder Mischungen davon, die bis zu 30 Gew.-% , bezogen auf die äußere Schicht, ersetzt sein können durch andere Polymere,
eine mittlere Polymerschicht auf Basis von Ethylen-C₁₋₈-Alkylacrylat-Copolymeren und Ethylen-C₁₋₈-Alkylacrylat-Maleinsäureanhydrid-Copolymeren, die bis zu 20 Gew.-% bezogen auf die mittlere Schicht, ersetzt sein können durch andere Polymere,
eine innere Polymerschicht auf Basis von, bezogen auf die innere Schicht, 40 bis 100 Gew.-% aliphatischen oder teilaromatischen Polyamiden oder Copolymiden oder Mischungen davon, 0 bis 60 Gew.-% carboxylgruppenhaltigen Ethylen-Copolymeren oder deren Salzen und 0 bis 20 Gew.-% weiteren Polymeren, deren Gesamtmenge 100 Gew.-% ergibt.

Die erfindungsgemäße mehrschichtige Schlauchfolie weist vorzugsweise einen Durchmesser von 20 bis 200 mm auf. Die gesamte Wandstärke beträgt vorzugsweise 25 bis 85 Mikrometer, besonders bevorzugt 30 bis 70 Mikrometer, insbesondere 40 bis 70 Mikrometer. Die erfindungsgemäße Schlauchfolie weist gegenüber den bekannten Schlauchfolien eine verbesserte mittlere Polymerschicht (Barriereschicht) auf und läßt sich je nach Lebensmittelprodukttyp in der Haftung der inneren Schicht variieren. Beispielsweise weist eine nicht modifizierte innenliegende Polyamidschicht eine relativ hohe Haftung auf, die insbesondere für Brühwursttypen mit Geleebildungsneigung geeignet ist. Für Rezepturen mit hohem Eiweißgehalt ist eine Modifikation der Hafteigenschaften notwendig, damit nach der Wärmebehandlung und Kühlung, d. h. im fertig gekühlten Stadium, beim Schälen keine Reste des Lebensmittelproduktes auf der Innenfläche der Wursthülle kleben und von der geschälten Wurst abgerissen werden. Erfindungsgemäß kann die Haftung der Innenschicht gezielt eingestellt werden, ohne daß beispielsweise die Innenseite der Schlauchfolien mit einer Ölmischung oder einem Trennwachs besprüht werden muß, um die Haftungseigenschaften zu variieren.

Durch die variierte Zusammensetzung der inneren Polymerschicht ändern sich auch die mechanischen Eigenschaften der Schlauchfolie, so daß an die mittlere Polymerschicht besondere Anforderungen gestellt werden, insbesondere im Hinblick auf die Zwischenschichthaftung und Färbung.

Die erfindungsgemäße mehrschichtige Schlauchfolie erlaubt mit dem speziellen Aufbau der mittleren Polymerschicht eine weitgehende Variation der inneren Polymerschicht zur Anpassung an eine Vielzahl möglicher Lebensmittelprodukte.

Die erfindungsgemäße mehrschichtige Schlauchfolie erfüllt auch die nachfolgend aufgeführten Anforderungen und zeigt damit ein ausgewogenes Eigenschaftsprofil für unterschiedlichste Anwendungen:

### Festigkeit

Das Folienmaterial muß hohem Fülldruck von 1 bis 2 bar, wie er in der Fleischindustrie üblich ist, Stand halten. Die Schlauchfolie muß auf gängigen Klippautomaten reibungslos laufen. Gleichzeitig soll das Erreichen des EFK (empfohlenen Füllkalibers) leicht möglich sein, und die elastische Verformung der Folie soll möglichst kalibertreue regelmäßige Produkte ergeben.

### Temperaturbeständigkeit

Das in die Schlauchfolie gefüllte Produkt soll möglichst nach der Wärmebehandlung (übliche Temperaturen für Brüh- und Kochwurst) keine übermäßige bzw. unregelmäßige Verformung aufweisen.

### Barriereeigenschaft

Die ausreichende Sauerstoffbarriere der Folie ist eine solche, die die frühzeitige Oxidation (u. a. auch Vergrauung der Wurst) verhindert und eine mehrwöchige Lagerung ohne westliche Farbveränderungen sowie andere unerwünschte Folgereaktionen ermöglicht. Eine ausreichende Wasserdampfbarriere ermöglicht auch eine wochenlange Lagerung einer Wurst oder eines in der Hülle verpackten Lebensmittels ohne nennenswerten Gewichtsverlust.

### Bräthaftung

Häufig spricht man von einem Haftungsvermögen der Wurtshülle am Füllgut (meistens Wurstbrät). Man spricht davon, dass der Absatz von Gelee verhindert oder verringert wird. In der Praxis ist aber die Affinität der Innenschicht der Wurtshülle immer unterschiedlich, abhängig von der Rezeptur, Wärmebehandlung, ausgewählten Abkühlmethode, des Binnendruckes, usw. Aus diesem Grund kann man nicht eine durch die PA-Zusammensetzung vorgegebene Haftung als immer optimal bezeichnen. die Aufgabe des Wursthüllenherstellers ist es, eine wählbare Haftung zum Füllgut (Wurstbrät, Kochschinken und andere Kochpökelwaren, Fischemulsion usw.) zu fertigen, die für den Anwender in der Praxis nach seinen Bedürfnissen angepaßt werden kann.

### Raffbarkeit

Es ist nicht nur die Aufgabe, eine Wursthüllle zu fertigen, die sich perfekt auf Hochleistungsraffanlagen raffen läßt (hohe Kompression, hohe Geschwindigkeiten, usw.), sondern sie soll nach der Wärmebehandlung und Kühlung möglichst keine oder nur möglichst schwer sichtbare Raffmarkierungen aufweisen. Nicht alle auf dem Markt erhältlichen Wursthüllen zeichnen sich durch diese Eigenschaft aus, d. h. man beobachtet kleine Risse an der Oberfläche oder mindestens Markierungen, die nach der Wärmebehandlung, dem Duschen und der Kühlung nicht verschwunden sind. Die optimale Hülle soll in diesem Sinne in ihrer Zusammensetzung (Dicke, Materialauswahl, Schichtaufbau, usw.) so abgestimmt sein, dass die Oberfläche möglichst frei von unerwünschten während des Raffvorgangs verursachten Knickbeanspruchungen bleibt.

### Gängigkeit beim Füllen/Klippen

Die ideale Wursthülle aus Polymeren soll möglichst leicht zu füllen sein, soll aber gleichzeitig ausgezeichnete Festigkeit bieten. Zu steife Wursthüllen können nur maschinell mittels Klippers mit Darmbremse erfolgreich verarbeitet werden. Die Aufgabe soll es sein, diese Hülle auch mit der Hand füllen zu können, wenn auch der Endverschluß mittels eines Handtischklippers getätigt wird. Dies ist nicht nur von der Griffigkeit des Materials abhängig, sondern auch von der Zusammensetzung und den mechanischen Eigenschaften des Materials.

Die erfindungsgemäße mehrschichtige Schlauchfolie ist vorzugsweise biaxial orientiert und thermofixiert. Insbesondere handelt es sich um eine coextrudierte Schlauchfolie. Durch die biaxiale Orientierung und Thermofixierung ist die Schlauchfolie schrumpfbar. Der Schrumpfungswert in mindestens einer Richtung beträgt bei 90°C vorzugsweise max. 15%.

Die erfindungsgemäße mehrschichtige Schlauchfolie umfaßt die angegebenen drei Schichten und ist vorzugsweise aus diesen Schichten aufgebaut. Dabei kann die mittlere Schicht wiederum dreischichtig aufgebaut sein aus zwei Schichten auf Basis von Ethylen-C₁₋₈-Alkylacrylat-Maleinsäureanhydrid-Copolymeren mit einer dazwischenliegenden Schicht auf Basis von Ethylen- C₁₋₈-Alkylacrylat-Copolymer.

Vorzugsweise ist die mittlere Polymerschicht auf Basis von Ethylen-Methylacrylat-Copolymeren und Ethylen-Butylacrylat-Maleinsäureanhydrid-Copolymeren aufgebaut. Dabei kann eine Mischung (Blend) der beiden Copolymere vorliegen, oder die mittlere Polymerschicht kann dreischichtig aufgebaut sein, aus einer Ethylen-Methylacrylat-Mittelschicht und zwei damit verbundenen Ethylen-Butylacrylat-Maleinsäureanhydrid-Copolymerschichten.

Die mittlere Polymerschicht ist vorzugsweise aus 50 bis 80, besonders bevorzugt 60 bis 70 Gew.-% Ethylen-Methylacrylat-Copolymeren und 20 bis 50, vorzugsweise 30 bis 40 Gew.-% Ethylen-Buthylacrylat-Maleinsäureanhydrid-Copolymeren aufgebaut.

Im Ethylen-Methylacrylat-Copolymer beträgt der Methylacrylatanteil vorzugsweise 5 bis 30 Gew.-%, insbesondere 9 bis 20 Gew.-%, speziell 9 oder 20 Gew.-%.

Die carboxylgruppenhaltigen Ethylen-Copolymere oder deren Salze werden häufig auch als Ionomere bezeichnet. Es handelt sich beispielsweise um Na- oder Zn-Ionomere eines Ethylen-Acrylsäure-Copolymers mit einem Acrylsäuregehalt von vorzugsweise 1 bis 20, besonders bevorzugt 2 bis 5 insbesondere etwa 3,5 Gew.-%.

Das Ethylen-Butylacrylat-Maleinsäureanhydrid-Copolymer weist vorzugsweise neben Ethylen 5 bis 10 Gew.-%, besonders bevorzugt 7 bis 9 Gew.-%, insbesondere etwa 8 Gew.-% Butylacrylat und 1 bis 5 Gew.-%, besonders bevorzugt 1 bis 3 Gew.-%, insbesondere 2 Gew.-% Maleinsäureanhydrid auf.

Vorzugsweise ist die äußere Polymerschicht aufgebaut aus, bezogen auf die äußere Schicht, 40 bis 95, besonders bevorzugt, 60 bis 90 Gew.-% Polyamid-6, 3 bis 25, besonders bevorzugt 5 bis 15 Gew.-% teilaromatischem Polyamid-6I/6T, 1 bis 15, vorzugsweise 3 bis 5 Gew.-% Copolyamid-6/66, 1 bis 30, vorzugsweise 3 bis 20 Gew.-% meta-Xylylengruppen enthaltendem teilaromatischem Polyamid-6, 1 bis 30, vorzugsweise 2 bis 20 Gew.-% carboxylgruppenhaltigen Ethylen-Copolymeren oder deren Salzen, deren Gesamtmenge 100 Gew.-% ergibt.

Polyamid-6 ist beispielsweise aus Caprolactam oder Aminonitril aufgebaut. Beim teilaromatischen Polyamid-6I/6T handelt es sich um ein Polyamid aus Hexamethylendiamin und Isophthalsäure bzw. Terephthalsäure. Es kann auch ein Copolyamid aus Caprolactam und Hexamethylendiamin/Isophthalsäure oder Hexamethylendiamin/Terephthalsäure eingesetzt werden.

Bei Polyamid-6/66 handelt es sich um ein Copolyamid aus Monomeren des Polyamid-6 und Monomeren des Polyamid-66. Vorzugsweise liegen 85 Teile Monomere des Polyamid-6 und 15 Teile Monomere des Polyamid-66 vor.

Als weitere Polymere in den einzelnen Schichten kommen solche Polymere in Betracht, die vorzugsweise mit den Basispolymeren der einzelnen Schichten mischbar sind. Es kann sich dabei um weitere Polyamide, um Polyolefine, modifizierte Polyolefine oder ähnliche Polymere handeln. Vorzugsweise ist die äußere Polymerschicht aus den vorstehend angegebenen Polymeren aufgebaut. Gleiches gilt für die mittlere Polymerschicht. Die innere Polymerschicht weist vorzugsweise neben den Polyamiden und den carboxylgruppenhaltigen Ethylen-Copolymeren oder deren Salzen keine weiteren Polymere auf.

In der inneren Polymerschicht können die Zusammensetzung der Polyamide und der Anteil der carboxylgruppenhaltigen Ethylen-Copolymere oder deren Salze so eingestellt werden, daß sich eine geeignete Haftung an den aufzunehmenden Lebensmitteln (Wurstbrät) ergibt.

Die erfindungsgemäße mehrschichtige Schlauchfolie ist vorzugsweise eine drei- oder fünfschichtige Folie, besonders bevorzugt eine dreischichtige Folie.

Vorzugsweise beträgt der Anteil der äußeren Schicht 40 bis 75 Gew.-%, der mittleren Schicht 10 bis 50 Gew.-% und der inneren Schicht 5 bis 25 Gew.-%, wobei das Gesamtgewicht 100 Gew % ergibt. Bei der Dreischicht-Folie ist dabei die mittlere Schicht eine einzige Schicht, während bei der Fünfschicht-Folie die mittlere Schicht aus drei Schichten aufgebaut ist, wie vorstehend ausgeführt.

Die erfindungsgemäße mehrschichtige Schlauchfolie kann nach unterschiedlichen bekannten Verfahren hergestellt werden. Vorzugsweise wird sie durch Coextrudieren der die Schichten bildenden (Co)Polymere hergestellt. Geeignete Coextrusionsverfahren sind dem Fachmann bekannt.

Die erfindungsgemäßen mehrschichtigen Schlauchfolien werden insbesondere als Verpackungshülle für pastöses Füllgut verwendet (Wursthülle). Dabei handelt es sich beim pastösen Füllgut insbesondere um Lebensmittel, speziell um Wurst oder Fleischerzeugnisse. Ein Befüllen ist jedoch auch mit Nicht-Lebensmittelprodukten möglich.

Die Erfindung betrifft zudem ein Fleischerzeugnis, das von einer wie vorstehend beschriebenen mehrschichtigen Schlauchfolie umschlossen ist.

Die Erfindung wird nachstehend anhand von Beispielen näher erläutert.

Mit einer 3- und 5-Schicht-Beispiel-Anlage zur Herstellung von biaxial orientierten, thermofixierten Schlauchfolien wurden verschiedene in Tab. 1 genannte Schichtaufbauten und Zusammensetzungen fertiggestellt.

Für die Außen-PA-Schicht wurde ein 50 mm-Extruder und für die anderen Schichten ein 35 mm-Extruder verwendet. Die Massetemperaturen im PA-Extruder für die Aussen- und Innenschicht betrugen 250 bis 262°C (je nach Rezeptur) und in den anderen Extrudern für die Mittelschicht oder die 3 Mittelschichten ca 195 bis 210°C je nach Rezeptur. Die Massetemperatur im Mehrschichtkopf (3- und 5 Schichtkopf) betrug 268°C.

Der Folienschlauch (der sogenannte Primärschlauch) wird durch eine kühles Wasserbad (4°C) durchgezogen und erhält dadurch den Primärschlauchdurchmesser. In einem zweiten Wasserbad (75 bis 95°C) wird der Primärschlauch erwärmt und anschließend mittels eingeschlossener Druckluftblase (Reckblase oder Sekundärschlauch) zwischen zwei Walzenpaaren auf das dreifache (längs und quer) gedehnt (biaxial orientiert).

Nach der Orientierung wird der Schlauch (teritärer Schlauch) wieder zwischen zwei Walzenpaaren mittels Druckluftblase (teritäre Blase ) in einem Heisslufttunnel (Verweilzeit ca. 6 bis 7 sek.) auf eine Temperatur von 135 bis 200°C geschrumpft, d. h. thermofixiert. Nach der Thermofixierung wird der Schlauch gekühlt und mit kontrollierter Spannung aufgewickelt.

Die im nachfolgenden aufgeführten Beispiele wurden an einer Drei- und Fünfschichtschlauchcoextrusionslinie durchgeführt. Alle Versuche, die die Funktionalität der Innenschicht überprüfen sollen, wurden nur auf einer 3-Schicht Anlage realisiert.

### Verwendete Polymere

### Aussenschicht (A)

Die Polymere der Aussenschicht wurden mittels eines 50 mm Extruders verarbeitet und vorher mittels einer Dosieranlage homogen verteilt.

### PA-Gemisch 1:

Polyamid 6 mit einem Schmelzpunkt von ca. 220°C. Die verwendete Konzentraion betrug zwischen 60 und 90 Gew.-% der Gesamtaussenschicht.

Polyamid (aliphatisch) mit meta-Xylylen-Gruppen (MXD6) mit einem Schmelzpunkt von ca. 243°C. Die meistverwendete Konzentration lag zwischen 4 und 20 Gew.-% der Gesamtaussenschicht abhängig von der Additiv und Farbenkonzentration und aber auch der Konzentration des amorphen PA (PA 6I/6T).

Aromatisches PA(PA-6I/6T); die Konzentration variierte abhängig von der Farbkonzentration von der Menge des MXD 6, usw. aber lag meistens zwischen 3 und 15 %.

### ZM-Isomere von Ethylen-Acrylsäure-Copolymeren mit 3,5 bis 10 % Acrylsäuregehalt

### Mittelschicht (B)

Die Polymere der Mittelschicht wurden mittels eines 35 mm Einschneckenextruders verarbeitet und vorher mittels einer Dosieranlage homogen verteilt. Bei der 3-schichtigen Struktur besteht die Mittelschicht (B2) hauptsächlich aus einem Gemisch aus EMA und EAA. Bei der 5-schichtigen Struktur besteht die Mittelschicht aus 3 Schichten: einer Kemschicht aus EMA und zwei PA-haftenden Schichten entweder aus EAA oder wiederum aus einem Gemisch EMA + EAA.

### Gemisch der B-Schicht (erwähnt als B1, B2 und B3)

Ethylen/Methylacrylat-Copolymer (EMA) weist einen Methylacrylat-Anteil von 9 oder 20 Gew.-%. auf. Die Konzentraion des verwendeten EMA lag zwischen 60 und 70 Gew.-% abhängig von der Rezeptur der Aussenschicht, der Farbkonzentration der Mittel- und /oder der Aussenschicht, usw. Ethylen-Butylacrylat-Maleinsäureanhydrid-Copolymer (EAA). Es handelt sich um ein Copolymer aus 90 % Ethylen, 8 % Butylacrylat und 2 % Maleinsäureanhydrid (MSA). Die EAA-Konzentration von 30 bis 40 Gew.-% war die meistverwendete in allen Versuchen.

### Innenschicht (C)

Die Polymere der Innenschicht wurden mittels eines 35 mm Extruders verarbeitet und wie in den anderen Fällen vorher über eine Portionieranlage homogen verteilt.

Die Versuchsreihe der vielen unterschiedlichen Kombinationen der Innenschicht wurden an Hand einer 3-Schicht-Schlauchfolie absolviert, und die Ergebnisse wurden als solche bewertet:

### PA-Gemisch 1:

Polyamid-6 wie bereits in der Aussenschicht beschrieben. Die verwendete Konzentration betrug 50 bis 60 Gew.-%.

Co-Polyamid (PA-6/66) in Konzentrationen von 5 bis 40 Gew.-% abhängig von der verwendeten Ionomer- oder Ionomer/PA-Konzentration oder der relativ geringen Konzentration des armorphen PA.

Aromatisches PA (PA 6I/6T) wie bereits in der Aussenschicht beschrieben. Die Konzentration lag hier von 5 bis 15 Gew.-%.

Ionomere (Surlyn® von Du-Pont) - Zink-Ionomer-Typen wurden verwendet und eine einziger Na-Ionomer-Typ und zwar wie folgt:
Ionomer 1: Surlyn® 1801
Ionomer 2: Surlyn® 1650
Ionomer 3: Surlyn® AM 7962 (PA-modifizierter Ionomer)
Ionomer 4: Surlyn® 1601 - Na-Ionomer Typ
Ionomer 5: Surlyn® 1652
Ionomer 6: Surlyn® 1702

### Lothader® 4700 (Terpolymer aus Ethylen, 26,5 - 32,5 % Ethylenacrylat und 1,1 - 1,5 % Maleinsäureanhydrid)

Die Versuchsreihen sind in der nachfolgenden Tabellen 1-1 und 1-2 zusammengefaßt, und die Ergebnisse sind hinsichtlich der Haftung der modifizierten Innenschicht zum Lebensmittelprodukt (Brühwurstbrät und Kochschinkenmasse mit hohem Eiweißgehalt) ausgewertet.
Tabelle 1-1: Darstellung der Ergebnisse der Versuchsreihe (1-6)
Tabelle 1-2: Darstellung der Ergebnisse der Versuchsreihe (7-12)

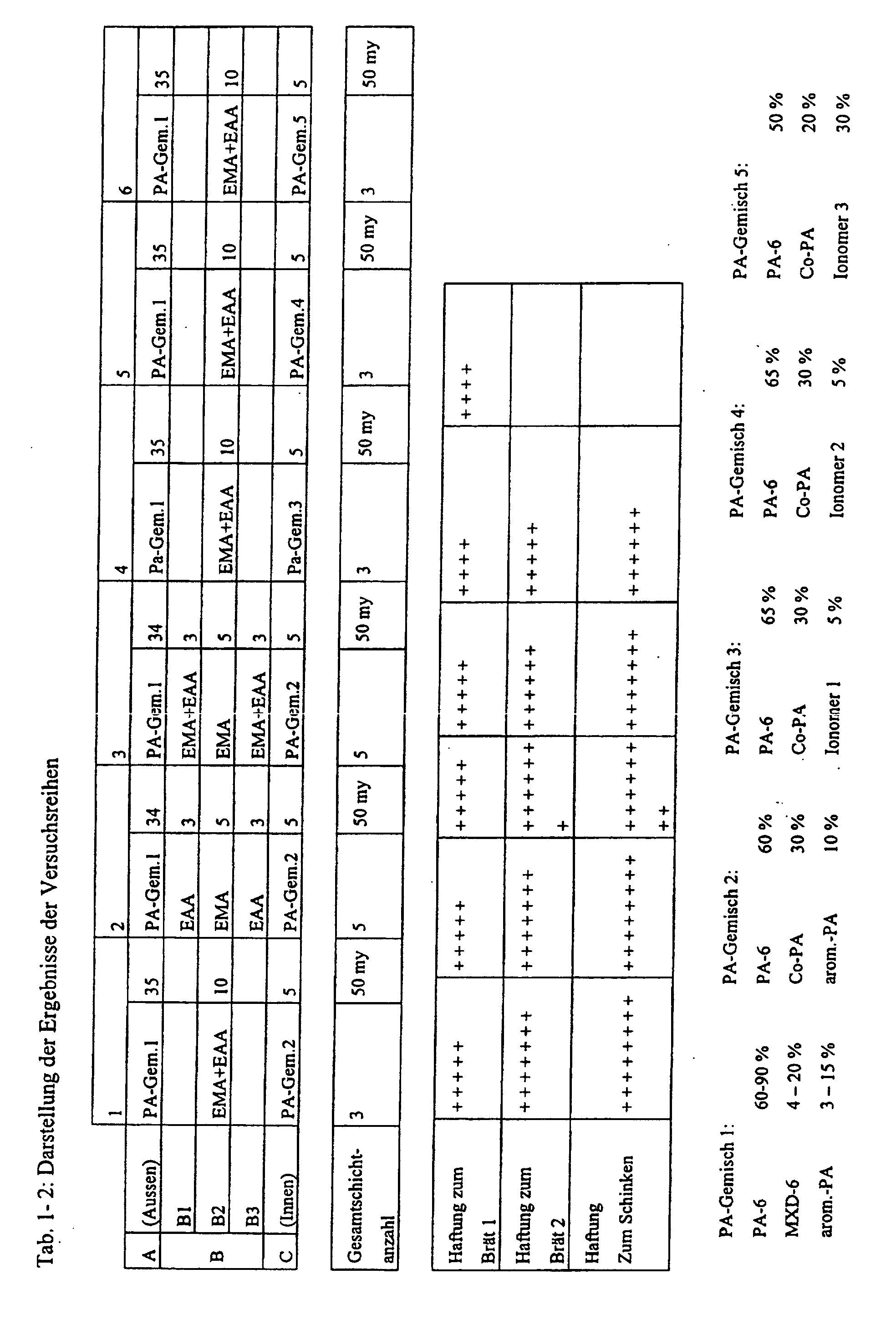

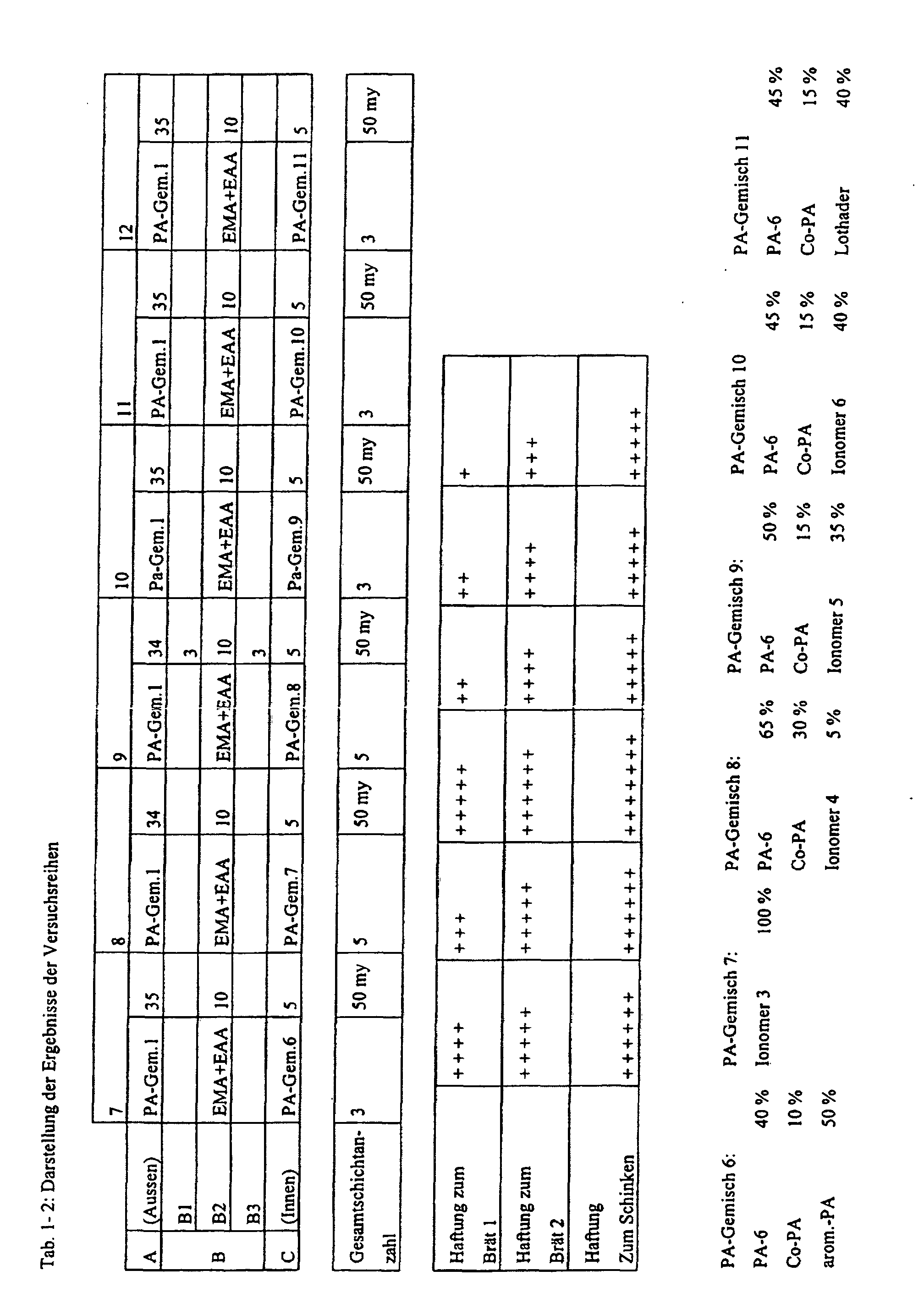

### Diskussion der Ergebnisse

Die Versuchsreihe wurde an Hand von vielen Brühwurst- und Schinkenrezepturen angewandt, wovon 12 Beispiele als "typisch" ausgesucht und in den Tabellen wiedergegeben sind.

Für die dargestellte Versuchsreihe wurden zwei Brühwurstrezepturen und eine Kochschinkenrezeptur ausgewählt, um die verschiedenen Grade der Folienaffinität (Haftung) zu diesen Wurst- und Schinkensorten zu illustrieren.

Brühwurstbrät 1 steht für eine Brühwurst, hergestellt ohne Zusatz von Fremdeiweiss (Milcheiweiss, Sojaeiweiss, usw.) oder anderen Bindemitteln (z. B. Stärke), wie beispielsweise in Österreich hergestellt (Extrawurst lt. Kapitel B 14 - Codex Alimentarius Austricaus). Diese Brühwurst steht für eine relativ "labile" Emulsion, da der Hersteller ziemlich nah an die vorgeschriebenen Grenzwerte rückt und damit sehr oft mit Geleeabsatzbildung konfrontiert ist. Selbstverständlich sind dabei auch die Zerkleinerungstechnik, Wärmebehandlungsart (Höhe und Steuerung der Temperatur), ausgewählte Kühlungsmethode, usw. von entscheidender Bedeutung.

Brühwurstbrät 2 steht für eine Brühwurst, hergestellt unter Verwendung von einigen der o. e. Bindemittel bzw. Fremdeiweisstypen. Diese Brühwurst besitzt in der Bindung "Reserven" d. h. neigt überhaupt nicht zu Geleeabsatzbildung und ist wesentlich fester als die erstbeschriebene Qualität.

Kochschinken wurde bewußt nur in einer Variante ausgewählt: ein Putenschinken mit hohem Eiweissgehalt, der eigentlich mit üblichen Kunststoffdärmen problematisch zu schälen ist. Diese Kochschinkenrezeptur ist auch repräsentativ für andere Lebensmittelmassen mit zu hoher Affinität zum unmodifizierten Polyamid.

Die Beurteilung der Ergebnisse bezüglich Haftung der verschiedenen Brühwurst- und Kochschinkenrezepturen stellte sich als relativ problematisch dar. Obwohl es nach der Literatur Versuche gegeben hat, die Kraft, die man zum Schälen braucht, objektiv zu messen (hauptsächlich bei Rohwurst), bietet diese Methode in diesem Fall (Brühwurst und Kochschinken) zu wenig Differenzierung, obwohl in der Praxis die Unterschiede visuell sehr groß sind.

Für diesen Zweck wurde eine dem Fachmann leicht verständliche Skala der visuellen Beurteilung der Haftung zur Folieninnenfläche entwickelt.

| **Symbol** | **Beschreibung der Folieninnenfläche beim Schälen** |
|---|---|
| +++++ +++ | Beim Schälen gesamte Darminnenfläche mit Fleischmasse bedeckt - unappetitliches Aussehen der geschälten Wurst |
| +++++ ++ | Grobe Reste auf der Darminnenfläche inselförmig - höhere und geringere Haftung unregelmäßig verteilt |
| +++++ + | Kleine Reste auf der Darminnenfläche - visuell nicht unappetitlich, aber auch nicht optimal |
| +++++ | Optimale Haftung, leichtes Schälen, keine Reste auf der Folieninnenfläche, aber auch saubere geschälte Wurstober fläche |
| ++++ | Sehr kleine, fast nicht sichtbare Flächen mit Geleeabsatzetwas zu geringe Haftung |
| +++ | Geleeabsatz deutlich - zu geringe Haftung |
| ++ | Mehr Geleeabsatz an zur Folieninnenfläche haftende Flächen - unappetitliches Aussehen der geschälten Wurst |
| + | Rundherum Geleeabsatz |

### Beispiel 1:

Die Innenschicht ist nicht mit Ionomeren modifiziert, enthält neben dem Polyamid 6 auch ein Co-Polyamid (PA 6.66) und ein aromatisches Polyamid (PA 6I/6T). Erwartungsgemäß hatte diese Wursthülle die höchste Haftung. Bei der Brühwurst 1 erwies sich die Haftung als optimal, aber bei der Brühwurst 2 war diese zu hoch. Beim Putenschinken mit hohem Eiweissgehalt war das Schälen so problematisch, daß das Aussehen sowohl der Folie als auch des geschälten Produktes unannehmbar war.

### Beispiel 2:

In diesem Beispiel war die Innenschicht identisch, aber die Folie wurde in einer 5-schichtigen Struktur PA/EAA/EMA/EAA/PA hergestellt. Die mechanischen Eigenschaften und die Durchlässigkeit (Sauerstoff und Wasserdampf) dieser Folie waren sehr der Folie im Beispiel 1 ähnlich. Unter praktischen Gesichtspunkten war diese Folie kaum von der anderen zu unterscheiden. Das Ziel war es diesmal, die Haftung der einzelnen Schichten zu prüfen, insbesondere das Beispiel 2 und 3 in der 5-schichtigen Struktur.

### Beispiel 3:

Wie im Beispiel 2 war die Innenschicht identisch aber statt EAA in der Schicht B1 und B2 wurde ein Gemisch aus 70 Gew.-% EMA und 30 Gew.-% EAA verwendet. Unter praktischen Bedingungen (Schälen, Reißen, usw.) und auch bei hoher Haftung der Fleischmasse (Putenschinken) war das Zusammenhalten der Schichten in den Beispielen 1 bis 3 unverändert gut.

### Beispiel 4:

Mit dem Beispiel 4 beginnen die Versuche der Modifizierung der Innenschicht - in diesem Fall mit der Zugabe einer minimalen Menge eines Zink-Ionomers (Surlyn® 1801). Der Unterschied zu den Beispiel 1 bis 3 (maximale Haftung) ist gering. Es werden feine Veränderungen an der Folienoberfläche beobachtet.

### Beispiel 5:

Die Ergebnisse des Beispiel 5 bezüglich Haftung der Folie zur Fleischmasse waren dem Beispiel 4 identisch.

### Beispiel 6:

In diesem Fall war die Zugabemenge eines PA-modifizierten Ionomers (Surlyn® AM 7926) größer, so daß man bei der Brühwurst 1 ohne Zusatz von Bindemitteln und Fremdeiweiss, erste äußerst kleine Flächen mit Geleeabsatz beobachten konnte. Dagegen war die Brühwurst hergestellt unter Verwendung von Bindemitteln in der Haftung erst jetzt optimal.

### Beispiel 7:

Die Ergebnisse des Beispiels 7 bezüglich Haftung der Folie zur Fleischmasse waren dem Beispiel 6 fast identisch.

### Beispiel 8:

Die Haftung der Folieninnenfläche fiel, so daß die Brühwurst 1 bereits unakzeptabel aussah und die Brühwurst 2 noch optimal war. Der Putenschinken war erst bei diesem Versuch optimal zu bezeichnen, d. h. ohne Reste an der Folieninnenoberfläche.

### Beispiel 9:

Durch die relativ geringe Zugabemenge des Natrium-Ionomers (Surlyn® 1601) war der Grad der Modifizierung relativ klein. Die Ergebnisse des Beispiel 9 sind bezüglich der Haftung dem Beispiel 5 ähnlich.

### Beispiel 10,11 und 12:

Der Grad der Modifizierung war stärker, so daß beide Brühwürste bereits zu viel Geleeabsatz aufwiesen und der Schinken mit hohem Eiweissgehalt noch immer im Schälverhalten optimal blieb.

Alle Versuchsreihen wurden unter industriellen Bedingungen getestet, d. h. für jede Wurst bzw. Schinkensorte in einem anderen Fleischverarbeitungsbetrieb und mehrmals wiederholt. Nur drei erwähnte Fleicherzeugnisse wurden als repräsentativ und kontrastreich ausgewählt, obwohl Versuche auch mit einigen anderen Rezepturen gemacht wurden. Wichtig bei den Testreihen war, daß der Fleischverarbeitungsbetrieb immer die gleichen Herstellungsbedingungen angewandt hat. Bekannterweise können kleine Unterschiede in der Wärmebehandlung oder Kühlung die Ergebnisse verfälschen und auf diese Weise die Auswertung erschweren. Man hat sich aus diesem Grund wiederholt auf gleichbleibende Industriebedingungen und Rezepturen typisch für das jeweilige Land konzentriert.

## Patentansprüche

1. Mehrschichtige Schlauchfolie auf Basis von Polyamid, umfassend
- eine äußere Polymerschicht auf Basis von aliphatischen oder teilaromatischen Polyamiden oder Copolyamiden oder Mischungen davon, die bis zu 30 Gew.-%, bezogen auf die äußere Schicht, ersetzt sein können durch andere Polymere,
- eine mittlere Polymerschicht auf Basis von Ethylen-C₁₋₈-Alkylacrylat-Copolymeren und Ethylen-C₁₋₈-Alkylacrylat-Maleinsäureanhydrid-Copoly-meren, die bis zu 20 Gew.-%, bezogen auf die mittlere Schicht, ersetzt sein können durch andere Polymere,
- eine innere Polymerschicht auf Basis von, bezogen auf die innere Schicht, 40 bis 100 Gew.-% aliphstischen oder teilaromatischen Polyamiden oder Copolyamiden oder Mischungen davon, 0 bis 60 Gew.-% carboxyl-gruppenhaltigen Ethylen-Copolymeren oder deren Salzen und 0 bis 20 Gew.-% weiteren Polymeren, deren Gesamtmenge 100 Gew.-% ergibt.

2. Schlauchfolie nach Anspruch 1, die biaxial orientiert und thermofixiert ist.

3. Schlauchfolie nach Anspruch 1 bis 2, **dadurch gekennzeichnet, daß** der Schrumpfungswert in mindestens einer Richtung bei 90°C maximal 15 % beträgt.

4. Schlauchfolie nach einem der Ansprüche 1 bis 3, **dadurch gekennzeichnet, daß** die mittlere Schicht dreischichtig aufgebaut ist aus zwei Schichten auf Basis von Ethylen-C₁₋₈-Alkylacrylat-Maleinsäureanhydrid-Copolymeren mit einer dazwischenliegenden Schicht auf Basis von Ethylen- C₁₋₈-Alkylacrylat-Copolymeren.

5. Schlauchfolie nach einem der Ansprüche 1 bis 4, **dadurch gekennzeichnet, daß** die mittlere Polymerschicht auf Basis von Ethylen-Methylacrylat-Copolymeren und Ethylen-Butylacrylat-Maleinsäureanhydrid-Copolymeren aufgebaut ist.

6. Schlauchfolie nach einem der Ansprüche 1 bis 5, **dadurch gekennzeichnet, daß** die äußere Polymerschicht aufgebaut ist aus, bezogen auf die äußere Schicht, 40 bis 95 Gew.-% Polyamid-6, 3 bis 25 Gew.-% teilaromatischem Polyamid-6I/6T, 1 bis 15 Gew.-% Copolyamid-6/66, 1 bis 30 Gew.-% meta-Xylylen-Gruppen enthaltendem teilaromatischem Polyamid-6, 1 bis 30 Gew.-% carboxylgruppenhaltigen Ethylen-Copolymeren oder deren Salzen, deren Gesamtmenge 100 Gew.-% ergibt.

7. Schlauchfolie nach Anspruch 5 oder 6, **dadurch gekennzeichnet, daß** die mittlere Polymerschicht aus 50 bis 80 Gew.-% Ethylen-Methylacrylat-Copolymeren und 20 bis 50 Gew.-% Ethylen-Butylacrylat-Maleinsäureanhydrid-Copolymeren aufgebaut ist.

8. Verfahren zur Herstellung von mehrschichtigen Schlauchfolien gemäß einem der Ansprüche 1 bis 7 durch Coextrudieren der die Schichten bildenden (Co)Polymere.

9. Verwendung von mehrschichtigen Schlauchfolien gemäß einem der Ansprüche 1 bis 7 als Verpackungshülle für pastöses Füllgut.

10. Fleischerzeugnis, das von einer mehrschichtigen Schlauchfolie gemäß einem der Ansprüche 1 bis 7 umschlossen ist.

## Claims

1. A multilayer tubular film based on polyamide comprising
- an outer polymer layer based on aliphatic or partially aromatic polyamides or copolyamides or blends thereof, up to 30% by weight of which, based on the outer layer, can be replaced by other polymers,
- a middle polymer layer based on ethylene-C₁₋₈-alkyl acrylate copolymers and ethylene-C₁₋₈-alkyl acrylate-maleic anhydride copolymers,
up to 20% by weight of which, based on the middle layer, can be replaced by other polymers,
- an inner polymer layer based on 40 to 100% by weight, based on the inner layer, of aliphatic or partially aromatic polyamides or copolyamides or blends thereof, 0 to 60% by weight of carboxyl-containing ethylene copolymers or their salts and 0 to 20% by weight of other polymers, the total amount of which gives 100% by weight.

2. The tubular film as claimed in claim 1 which is biaxially oriented and thermoset.

3. The tubular film as claimed in claim 1, wherein the shrinkage value in at least one direction is a maximum of 15% at 90°C.

4. The tubular film as claimed in claim 1, wherein the middle layer is made up of three layers, of two layers based on ethylene-C₁₋₈-alkyl acrylate-maleic anhydride copolymers, with an intermediate layer based on ethylene-C₁₋₈-alkyl acrylate copolymers.

5. The tubular film as claimed in claim 1, wherein the middle polymer layer is made up on the basis of ethylene-methyl acrylate copolymers and ethylene-butyl acrylate-maleic anhydride copolymers.

6. The tubular film as claimed in claim 1, wherein the outer polymer layer is made up, based on the outer layer, of 40 to 95% by weight of nylon 6, 3 to 25% by weight of partially aromatic nylon 6I/6T, 1 to 15% by weight of copolyamide 6/66, 1 to 30% by weight of meta-xylylene-containing partially aromatic nylon 6, 1 to 30% by weight of carboxyl-containing ethylene copolymers or their salts, the total amount of which gives 100% by weight.

7. The tubular film as claimed in claim 5, wherein the middle polymer layer is made up of 50 to 80% by weight of ethylene-methyl acrylate copolymers and 20 to 50% by weight of ethylene-butyl acrylate-maleic anhydride copolymers

8. A process for producing multilayer tubular films as claimed in claim 1 by coextruding the (co)polymers forming the layers.

9. The use of multilayer tubular films as claimed in one of claims 1 to 7 as packaging casing for pasty filling.

10. A meat product which is enclosed by a multilayer tubular film as claimed in one of claims 1 to 7.

## Revendications

1. Pellicule multicouche en forme de boyau, à base de polyamide, comprenant
- une couche externe de polymère à base de polyamides ou copolyamides aliphatiques ou partiellement aromatiques ou de mélanges de ceux-ci, qui peuvent être remplacés par d'autres polymères à raison de jusqu'à 30 % en poids, par rapport à la couche externe,
- une couche médiane de polymère à base de copolymères éthylène/acrylate d'alkyle en C₁-C₈ et de copolymères éthylène/acrylate d'alkyle en C₁-C₈/anhydride maléique, qui peuvent être remplacés par d'autres polymères à raison de jusqu'à 20 % en poids, par rapport à la couche médiane,
- une couche interne de polymère à base, par rapport à la couche interne, de 40 à 100 % en poids de polyamides ou copolyamides aliphatiques ou partiellement aromatiques ou de mélanges de ceux-ci, 0 à 60 % en poids de copolymères d'éthylène contenant des groupes carboxy ou de leurs sels et 0 à 20 % en poids d'autres polymères, dont la quantité totale donne 100 % en poids.

2. Pellicule en forme de boyau selon la revendication 1, qui est orientée biaxialement et thermofixée.

3. Pellicule en forme de boyau selon la revendication 1 ou 2, **caractérisée en ce que** la valeur du retrait dans au moins une direction à 90°C est de 15 % au maximum.

4. Pellicule en forme de boyau selon l'une quelconque des revendications 1 à 3, **caractérisée en ce que** la couche médiane est constituée de trois couches consistant en deux couches à base de copolymères éthylène/acrylate d'alkyle en C₁-C₈/anhydride maléique avec une couche se trouvant entre celles-ci, à base de copolymères éthylène/acrylate d'alkyle en C₁-C₈.

5. Pellicule en forme de boyau selon l'une quelconque des revendications 1 à 4, **caractérisée en ce que** la couche de polymère médiane est constituée à base de copolymères éthylène/acrylate de méthyle et de copolymères éthylène/acrylate de butyle/anhydride maléique.

6. Pellicule en forme de boyau selon l'une quelconque des revendications 1 à 5, **caractérisée en ce que** la couche externe de polymère est constituée, par rapport à la couche externe, de 40 à 95 % en poids de polyamide-6, 3 à 25 % en poids de polyamide partiellement aromatique 6I/6T, 1 à 15 % en poids de copolyamide-6/66, 1 à 30 % en poids de polyamide-6 contenant des groupes méta-xylylène, 1 à 30 % en poids de copolymères d'éthylène contenant des groupes carboxy ou de leurs sels, dont la quantité totale donne 100 % en poids.

7. Pellicule en forme de boyau selon la revendication 5 ou 6, **caractérisée en ce que** la couche médiane de polymère est constituée de 50 à 80 % en poids de copolymères éthylène/acrylate de méthyle et de 20 à 50 % en poids de copolymères éthylène/acrylate de butyle/anhydride maléique.

8. Procédé pour la fabrication de pellicules en forme de boyau selon l'une quelconque des revendications 1 à 7, par coextrusion des (co)polymères constituant les couches.

9. Utilisation de pellicules multicouches en forme de boyau selon l'une quelconque des revendications 1 à 7, en tant qu'enveloppe de conditionnement pour un produit de remplissage pâteux.

10. Produit carné qui est entouré d'une pellicule multicouche en forme de boyau selon l'une quelconque des revendications 1 à 7.
